# EUROPEAN PATENT APPLICATION

(11) **EP 4 545 237 A1**
(43) Date of publication of application: **30.04.2025**
(21) Application number: 24206575.3
(22) Date of filing: 15.10.2024
(51) Int. Cl.: B23K 10/00

(54) **PLASMA CUTTING MACHINE**

(30) Priority: 25.10.2023 ES 202331892 U
(71) Applicant: Weldcut Punto-Plasma, S.L., 08192 Sant Quirze del Vallés Barcelona (ES)
(72) Inventor: Ballero, Stefano, 08192 Sant Quirze del Vallés, Barcelona (ES)
(74) Representative: Maslanka Kubik, Dorota Irena

(57) **Abstract**

The invention refers to a plasma cutting machine, comprising: a control unit (1); a power unit (2) for supplying and regulating the electrical energy required for plasma generation; two connectors (31, 32) suitable for connecting two separate plasma cutting torches (41, 42); two electrical circuits (51, 52) for optionally powering the respective connectors (31, 32) through the power unit (2) and activating the ignition arc of the corresponding torch (41, 42); two triggers (61, 62) associated with the respective torches (41, 42), where the individual activation of each trigger closes the electrical circuit (51, 52) to supply power to the connector (31, 32) corresponding to the selected torch (41, 42) and opens the electrical circuit powering the other connector (32, 31) corresponding to the other torch (42, 41); a positive terminal (53), or grounding terminal, for connecting the metal piece to be cut; and an air or gas inlet conduit (7) provided with a branch leading to conduits (71, 72) for alternately supplying the connectors (31, 32).

## Description

### Technical Field

The present invention is addressed to the metallurgic sector of cutting machines, and more specifically, to plasma cutting machines.

### Prior State of the Art

Plasma cutting machines are widely known in the market today, typically comprising: a power unit, which houses a transformer and a current rectifier; a connector for attaching a cutting torch to the power unit's current output; and a conduit for supplying air or gas suitable for generating a plasma arc, in the form of plasmagenic gas, used to cut different types of metals in different process for the metalworking industry

The torch is equipped with a trigger to activate the ignition arc from the power unit and a control unit to manage the machine's operation.

The torch allows for the installation of different interchangeable nozzles and tools at its front end, suitable for performing different types of cuts, such as: vertical cutting of thick materials, vertical cutting of thin materials, inclined or bevel cutting, interior cutting, manual cutting, automatic cutting (with a straight torch at 180°), part marking, and gouging.

The different cuts require specific accessories, meaning the operator must continuously assemble and disassemble the appropriate accessories on the machine's torch according to the type of work is being performed.

The issue that arises is that, during a typical workday, the operator frequently needs to perform different types of cuts, which requires changing the torch accessories continuously. This results in significant time loss and a reduction in productivity, thereby increasing the overall cost of the work. Additionally, this process creates a critical opportunity for errors, such as failing to install the correct consumable for the desired process or not assembling it in the required sequence.

The applicant is unaware of any plasma cutting machines currently available on the market that can solve the technical problem described.

### Disclosure of the Invention

The plasma cutting machine, which is the object of this invention, presents technical features that allow for the resolution of the identified problem in a simple and cost-effective manner.

To achieve this, and in accordance with the invention, this plasma cutting machine comprises two connectors for the connection of two separate plasma cutting torches. These connectors are coupled, via alternate electrical circuits, to a power unit and to two branches of a gas or air conduit suitable for generating a plasma arc.

The power unit is of a known type, equipped with a plasma power source and an arc initiator, capable of supplying the necessary electrical energy to the torches to initiate and maintain, with the aid of ionized air or gas, the plasma arc between the selected torch and a metal piece to be cut, which is connected to the positive terminal of the power unit.

The machine also includes individual and alternate activation triggers for igniting the plasma arc on the selected torch.

The activation of the ignition arc trigger on any one of the torches automatically deactivates the ignition arc trigger of the other torch, preventing both torches from functioning simultaneously.

This machine, therefore, allows the operator to alternatively use two torches powered by a single power unit and a single air or gas supply, each equipped with different tools or accessories to perform a specific type of cut. This is achieved with only a slightly higher cost than a conventional plasma cutting machine equipped with a single torch, but significantly lower than the cost of using a separate plasma cutting machine for each task.

With this invention, the operator has access to a single machine with two torches, which can be equipped with the appropriate nozzles and tools to perform two different types of cuts. The operator can select the plasma torch suited for the specific cut without having to constantly change the tools and nozzles on the torches.

This setup allows the operator to achieve greater efficiency when, within the same job, they need to switch between different cutting tasks, such as: from cutting thin materials to cutting thick materials, from straight cutting to bevel cutting, from cutting to gouging, from manual cutting with a 90° torch to automatic cutting with a 180° torch, or from any type of cut to another. Moreover, this system eliminates the risk of errors in assembling the consumables in the correct sequence.

For control logic reasons, the operator cannot operate both torches simultaneously, which eliminates the need to over-dimension the power stage of the plasma cutting machine.

From a technical standpoint, the invention involves making certain adjustments to the plasma cutting machine, specifically by including: A branch from the electronic power stage to supply electrical power to the second torch; triggers to select which connector will be electrically powered based on the torch chosen for use; a branch in the air/gas supply line to feed the second conduit that supplies the second torch.

### Brief Description of the Drawings

To complement the description provided and to facilitate the understanding of the features of the invention, a set of drawings is included with this descriptive report. These drawings, presented in an illustrative and non-limiting manner, show the following:

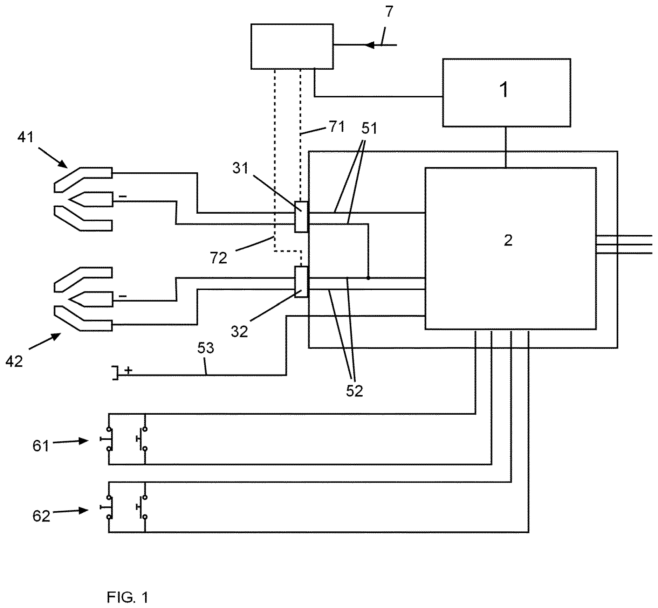

- Figure 1: A simplified diagram of the plasma cutting machine according to the invention.

### Detailed Description of Embodiments of the Invention

As shown in the attached figure, the plasma cutting machine comprises the following components: A control unit (1) for adjusting operating parameters; a power unit (2) for supplying and regulating the electrical energy required to generate plasma, and two connectors (31, 32) suitable for connecting two separate plasma cutting torches (41, 42).

The mentioned connectors (31, 32) are connected to the power unit (2) through two alternate electrical circuits (51, 52) for power supply, and via alternate conduits (71, 72) connected to an inlet conduit (7) for air or gas, necessary to generate the plasma arc.

The machine includes two triggers (61, 62) associated with their respective torches (41, 42). When either trigger is activated, it closes the electrical circuit (51, 52) that powers the connector (31, 32) corresponding to the selected torch (41, 42), initiating the plasma arc in that torch. Simultaneously, it opens the electrical circuit powering the connector (32, 31) corresponding to the other torch (42, 41), preventing both torches from functioning at the same time.

The power unit (2) also features a positive terminal (53), or grounding terminal, designed to connect to the metal piece being cut (not shown) in order to maintain the plasma arc between the torch (41, 42) in use and the metal piece once the ignition arc is created by activating the trigger (61, 62) of the selected torch.

Having sufficiently described the nature of the invention and a preferred embodiment, it is noted that the materials, shapes, sizes, and arrangement of the elements described may be modified, provided that such changes do not alter the essential characteristics of the invention, which are claimed below.

## Claims

1. A plasma cutting machine, comprising: A control unit (1); a power unit (2) for supplying and regulating the electrical energy required for plasma generation; two connectors (31, 32) suitable for connecting two separate plasma cutting torches (41, 42); two electrical circuits (51, 52) for optionally powering the respective connectors (31, 32) through the power unit (2) and activating the ignition arc of the corresponding torch (41, 42); two triggers (61, 62) associated with the respective torches (41, 42), where the individual activation of each trigger closes the electrical circuit (51, 52) to supply power to the connector (31, 32) corresponding to the selected torch (41, 42) and opens the electrical circuit powering the other connector (32, 31) corresponding to the other torch (42, 41); a positive terminal (53), or grounding terminal, for connecting the metal piece to be cut; and an air or gas inlet conduit (7) provided with a branch leading to conduits (71, 72) for alternately supplying the connectors (31, 32).
